Europäisches Patentamt

European Patent Office

Office européen des brevets

(11) Numéro de publication: **0 249 549 B1**

# FASCICULE DE BREVET EUROPEEN

(45) Date de publication de fascicule du brevet:
27.11.91

(51) Int. Cl.⁵: **G21C 3/62**

(21) Numéro de dépôt: 87401285.9

(22) Date de dépôt: 09.06.87

(54) Procédé de fabrication de pastilles de combustible nucléaire à base d'oxyde d'uranium.

(30) Priorité: 10.06.86 FR 8608380

(43) Date de publication de la demande:
16.12.87 Bulletin 87/51

(45) Mention de la délivrance du brevet:
27.11.91 Bulletin 91/48

(84) Etats contractants désignés:
BE DE ES GB

(56) Documents cités:
EP-A- 0 012 915   EP-A- 0 079 031
EP-A- 0 084 129   DE-A- 3 445 441
FR-A- 1 412 878   FR-A- 2 001 113
US-A- 3 094 377

(73) Titulaire: SOCIETE URANIUM PECHINEY, FRA-
MATOME & COGEMA, & Cie
Tour Manhattan La Défense 6, Place de l'Iris
F-92400 Courbevoie(FR)

(72) Inventeur: Pirsool, Michel
Graatakker 86
B-2300 Turnout(BE)

(74) Mandataire: Fort, Jacques et al
CABINET PLASSERAUD 84, rue d'Amsterdam
F-75009 Paris(FR)

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

L'invention concerne les procédés de fabrication de pastilles frittables à base d'oxyde d'uranium, par compression à froid de poudre constituée en majeure partie (au moins 80% en poids) de dioxyde d'uranium obtenu par voie sèche, (c'est-à-dire par réduction directe d'hexafluorure en dioxyde).

Les poudres obtenues par le procédé de conversion par voie sèche, décrit notamment dans les documents FR-A-2 060 242 et US-A-4 397 824, comportant une hydrolyse à la vapeur d'eau suivie d'une pyrohydrolyse du fluorure d'uranyle $UO_2F_2$ obtenu, ont l'avantage d'être aisément frittables. Mais en contrepartie, les pastilles en cru, dites aussi à l'état vert, obtenues par compression, sont relativement fragiles. Leur manutention est délicate; les rebuts qui en résultent sont importants si on ne prend pas de précautions spéciales.

On a proposé divers procédés pour diminuer la fragilité. En particulier, on a cherché à augmenter la densité à l'état vert par accroissement de la pression de compactage, ce qui a l'inconvénient de provoquer une usure prématurée des matrices de compression. On a également proposé de granuler la poudre avec addition d'un liant d'encollage et/ou de soumettre la poudre à divers traitements (FR-A-2 561 026). Toutes ces solutions présentent des inconvénients. Celles qui font intervenir de l'eau ou un liant posent des problèmes de criticité. Les procédés ne sont généralement applicables qu'à des lots faibles de produit, ne dépassant pratiquement pas 50 kg.

La fragilité des pastilles à l'état vert fabriquées par compression de poudre d'$UO_2$ obtenue par conversion en voie sèche peut probablement être attribuée au fait que cette poudre est consitituée de fines cristallites plus ou moins arrondies, avec une surstoechiométrie en oxygène très faible (rapport O/U de l'ordre de 2,02 à 2,06). Une ré-oxydation superficielle de la poudre d'$UO_2$ tend à améliorer la solidité des pastilles. Elle redivise les grains en des agrégats déchiquetés, ayant des tentacules susceptibles de s'entrelacer. La poudre retrouve alors des propriétés comparables à celles d'une poudre obtenue par voie humide ; lors de la mise en forme des pastilles par compression, les grains s'emboîtent et assurent la cohérence. Mais il est très difficile de réaliser de façon industrielle une oxydation superficielle ménagée de la poudre d'$UO_2$. L'oxydation tend à s'emballer jusqu'à ce que la totalité de l'oxyde soit passé à l'état de $U_3O_8$, difficilement frittable en pastilles exemptes de fissures, sauf à ajouter à la fabrication une étape de réduction lente et contrôlée au cours du pré-frittage. De plus, l'oxydation crée des ilots de $U_3O_8$ qui, lors du frittage, présentent un retrait plus important que les grains d'$UO_2$, d'où une texture hétérogène.

Il est par ailleurs pratiquement impossible d'effectuer une oxydation ménagée dans le réacteur de conversion directe d'$UF_6$, tel que celui décrit dans le brevet US-A-4 397 824 déjà mentionné.

L'utilisation de poudre d'$UO_2$ obtenue par voie humide est bien connue. Un choix convenable de la granulométrie permet d'obtenir une densité élevée des pastilles frittées. Le document DE-A-3 445 441 décrit un tel procédé et prévoit d'ajouter une teneur maximale de 10 % d'$U_3O_8$, d'origine non indiquée, à l'$UO_2$.

On a recyclé fréquemment les déchets de fabrication des pastilles, tels que les boues de rectification oxydées, les pastilles de rebut, les éclats et les poudres sous forme d'$U_3O_8$ (FR-A-2 001 113). Ces poudres oxydées améliorent légèrement la solidité des pastilles à l'état vert lorsqu'on les mélange à l'$UO_2$ avant compactage et frittage. Mais elles ont un effet très défavorable sur la densité et la texture des pastilles frittées, car l'$U_3O_8$ se présente sous forme de grains denses et grossiers. Le pourcentage d'$U_3O_8$ qu'on recycle de la sorte est couramment limité à 12 % max en poids.

On a par ailleurs déjà proposé de mélanger, à de la poudre d'$UO_2$ obtenue par voie humide, de l'$U_3O_8$ préparé à cet effet et destiné à donner naissance, lors du frittage, à des pores de retenue des gaz de fission (FR-A-1 412 078).

L'invention vise à fournir un procédé de fabrication qui augmente notablement la solidité des pastilles en vert fabriquées à partir d'$UO_2$ "Voie sèche", sans pour autant avoir un effet défavorable sur les propriétés des pastilles frittées.

Dans ce but, l'invention propose notamment un procédé selon la revendication 1.

La poudre fine sera généralement constituée de particules élémentaires ayant une dimension ne dépassant pas le micron, groupées en agglomérats passant au tamis à maille de 350 $\mu$m. La poudre fine comprimée représentant 60% au moins du mélange peut contenir jusqu'à 10% en poids d'oxyde d'un autre élément, tel que Pu et Gd.

La poudre d'$U_3O_8$ est avantageusement obtenue par oxydation à l'air d'$UO_2$, à une température inférieure à 800°C, menée jusqu'à ce que le rapport O/U corresponde sensiblement à la stoechiométrie de l'oxyde $U_3O_8$. Pour éviter le frittage de la poudre d'$U_3O_8$ et garantir une bonne désagglomération de cet $U_3O_8$ au cours du mélange ultérieur avec la poudre d'$UO_2$, l'oxydation est de préférence effectuée à une température comprise entre 250°C et 350°C.

EP 0 249 549 B1

Il faut remarquer que l'$U_3O_8$ ainsi préparé n'a aucune action porogène comparable à celle de l'$U_3O_8$ prévue par le document FR-A-1 412 878.

L'amélioration de la tenue des pastilles en vert augmente avec la teneur en poudre oxydée. Dans la pratique, il est souhaitable d'utiliser une teneur en $U_3O_8$ d'au moins 5 % en poids. On diminue ainsi les rebuts et les défauts occasionnés par les manutentions et on augmente le rendement de fabrication.

Le procédé selon l'invention est applicable non seulement à la fabrication de pastilles en oxyde d'uranium, mais aussi à celle de pastilles à oxyde mixte à base d'$UO_2$ dont les plus connus sont de types $UO_2$-$PuO_2$, $UO_2$-$ThO_2$-$Gd_2O_3$. De l'$UO_3$ de recyclage peut également être incorporé au mélange, à une teneur ne dépassant pas 10% en poids.

Dans tous les cas il est nécessaire de réaliser un mélange intime des poudres avant compactage à l'état de pastilles. On peut notamment réaliser ce mélange:
- à partir des poudres d'$UO_2$ et de $U_3O_8$ co-broyées dans un broyeur à marteaux,
- à partir de poudres d'$UO_2$ et de $U_3O_8$ brassées dans un mélangeur à bras et équipé d'une turbine de désagglomération.

Avant mélange, les poudres peuvent être désagglomérées par broyage et/ou tamisage, le résultat recherché étant l'absence d'agglomérats d'$U_3O_8$.

Dans tous les cas, les mélanges peuvent être réalisés dans des équipements industriels pour obtenir des lots homogènes importants, pouvant dépasser deux tonnes de lorsque l'enrichissement est suffisamment faible pour qu'il n'y ait pas de problème de criticité.

L'invention propose également un procédé complet de fabrication de pastilles à base de dioxyde d'uranium selon lequel on prépare des pastilles en vert par les étapes décrites ci-dessus, de façon à obtenir des pastilles constituées par un mélange intime d'$UO_2$ et d'$U_3O_8$ sans agglomérats isolés de $U_3O_8$. Puis on fritte les pastilles vertes à une température permettant d'obtenir la consolidation, habituellement de 1500 à 1800°C lorsque le frittage a lieu en atmosphère réductrice, de 1200 à 1350°C lorsque le frittage a lieu dans une atmosphère légèrement oxydante.

Divers exemples de mise en oeuvre de l'invention seront maintenant donnés, étant entendu qu'ils ne sont nullement limitatifs.

Exemple 1:

L'oxyde de départ, obtenu par voie sèche dans un four du genre décrit dans le brevet US-A- 4 397 824, est une poudre d'$UO_2$. La poudre obtenue est séparée en deux portions. L'une des portions, qui représente 19,1% en poids du total, est oxydée par passage dans des nacelles dans un four à 330°C parcouru par de l'air. La durée de séjour dans le four est de 3 h.

La poudre d'$UO_2$ restante et la poudre d'$U_3O_8$ ainsi obtenue sont calibrées par passage dans un tamiseur rotatif, de type turbocalibreur. Les poudres obtenues sont mélangées dans un mélangeur "NAUTAMIX" de 5000 litres. La dimension de maille du tamis peut aller de 200 à 350 microns.

Le mélange homogénéisé est granulé par précompactage, puis concassage en grains de 800 microns environ, suivant une technique classique. Les granulés sont ensuite comprimés en pastilles d'un diamètre de 10 mm et d'une hauteur de 17 mm.

Une comparaison entre les pastilles en vert ainsi obtenues, sans adjonction de liant, et des pastilles fabriquées à partir d'$UO_2$ provenant directement du four de conversion et également tamisé, a été effectuée.

Les essais ont montré que les pastilles en vert fabriquées à partir du mélange intime $UO_2$-$U_3O_8$ ont une résistance à l'écrasement bien supérieure.

Le test d'écrasement a consisté à mesurer la force nécessaire pour rompre une pastille donnée en la comprimant entre deux plans parallèles (essai brésilien). Pour des pastilles en poudre d'$UO_2$, on a obtenu environ 20 daN avec O/O = 2,04. Pour des pastilles en mélange $UO_2$-$U_3O_8$, on est passé à 67 daN pour O/U = 2,15.

Exemple 2 :

Des essais ont été effectués pour déterminer l'incidence de la température d'oxydation de la poudre et l'effet défavorable d'une oxydation à haute température.

Pour cela, on a préparé des mélanges par co-tamisage des mêmes poudres que celles décrites dans l'Exemple 1, mais avec des poudres d'$U_3O_8$ obtenues par oxydation à différentes températures.

Les résultats obtenus sont résumés dans le Tableau I ci-après. Ils montrent que les avantages du procédé selon l'invention diminuent si la température d'oxydation augmente.

3

TABLEAU I

| % poudre oxydée | t° d'oxydation | O/U du mélange | Résistance des pastilles (daN) |
|---|---|---|---|
| 24,6 | 300° C | 2,22 | 65 |
| 24,6 | 550° C | 2,22 | 45 |
| 24,6 | 900° C | 2,22 | 23 |
| Poudre UO₂ | | 2,05 | 18 |

Exemple 3 :

On a tamisé 1200 kg de poudre d'UO₂ fabriquée par le procédé "Voie sèche" décrit dans le document FR-A-2 060 242 au moyen d'un tamiseur à dépression ayant une maille de 104 microns. Une quantité de 25% de la poudre à tamiser a été oxydée à 350° C durant 4 heures, à l'air, puis mélangée à la poudre non oxydée dans un mélangeur à socs de charrue muni d'une turbine de désagglomération, durant 60 minutes. Le mélange UO₂-U₃O₈ obtenu avait un rapport O/U d'environ 2,22.

Le mélange de poudre a été granulé par précompactage, puis compactage suivant un processus classique. Les granulés ont été comprimés en pastilles de 10 mm de diamètre et de 15,2 mm de hauteur, ayant une densité en vert de 6,1 g/cm³, sur une presse rotative. Les pastilles ont ensuite été frittées à 1700° C pendant 3 heures dans une atmosphère d'hydrogène.

La fragilité des pastilles vertes a été déterminée par abrasion des pastilles dans une cage d'écureuil et mesure de la perte en poids après une rotation de plus de 600 tours. Ce mode de mesure caractérise la fragilité des arêtes, déterminante au cours de la manipulation des pastilles en vert.

L'essai de fragilité effectué sur les pastilles en vert préparées à partir du mélange UO₂-U₃O₈ a révélé une perte de matière de 6,5%, alors que les pastilles fabriquées en UO₂ ont subi une perte de 35%.

De plus, la frittabilité du mélange a été améliorée puisqu'on a obtenu une densité de 97,39% de la densité théorique au lieu de 97,19% pour la poudre d'UO₂.

Exemple 4:

On a mélangé pendant 60 minutes, dans un mélangeur à double vis orbital muni d'une turbine de désagglomération, 700 kg de poudre constitués de:

80% en poids de poudre d'UO₂ obtenue par voie sèche

20% de poudre obtenue par oxydation à 330° C pendant 4 heures de poudre d'UO₂ obtenue par voie sèche.

Ces poudres avaient été préalablement tamisées à l'aide d'une tamiseuse à dépression à maille de 150 microns.

Le mélange a été granulé par pré-compactage et concassage. Les granulés ont été comprimés en pastilles avec divers taux de compression, dans une matrice de 9.90 mm de diamètre pour fabriquer des pièces en vert de 16 mm de haut.

Les pastilles ont ensuite été frittées en four continu, par maintien pendant 3.5 heures à la température de frittage de 1760° C.

Les mêmes essais de compactage et de frittage ont été réalisés avec de la poudre d'UO₂. Les résultats des essais comparatifs sont résumés dans le Tableau II ci-après :

4

## TABLEAU II

### Avec de la poudre d'UO$_2$

| Pression de compactage (T) | Densité (g/cm$^3$) | Fragilité des arêtes (%) | Densité (%TD) |
|---|---|---|---|
| 2,5 | 5,77 | 25,4 | 97,42 |
| 3,5 | 6,02 | 19,1 | 97,63 |
| 4,5 | 6,29 | 20,0 | 97,81 |
| 5,5 | 6,44 | 15,5 | 97,94 |

### Avec de la poudre d'UO$_2$-U$_3$O$_8$

| | | | |
|---|---|---|---|
| 2,5 | 5,60 | 11,05 | 97,31 |
| 3,5 | 5,90 | 10,0 | 97,49 |
| 4,5 | 6,11 | 8,3 | 97,75 |
| 5,5 | 6,29 | 6,1 | 97,90 |

On voit qui les pastilles en vert faites à partir du mélange UO$_2$-U$_3$O$_8$ sont nettement plus solides. De plus, la frittabilité est légèrement améliorée. En fonction des caractéristiques intrinsèques des oxydes à pastiller et de l'installation de pastillage, on pourra obtenir la solidité optimale pour les pastilles vertes en ajustant la teneur en U$_3$O$_8$ et la pression de compactage.

Des essais similaires ont été effectués sur des pastilles comportant, en plus de l'oxyde d'uranium, un oxyde de matériau absorbant (gadolinium). Ces essais ont révélé qu'on conserve les mêmes résultats favorables du double point de vue de la diminution de la fragilité en vert et de l'absence de dégradation du produit fritté.

**Revendications**

1. Procédé de fabrication de pastilles frittables à base de dioxyde d'uranium, suivant lequel on comprime en pastille, à froid, un mélange de poudre constituée au moins en majeure partie d'oxyde d'uranium UO$_2$ obtenu par voie sèche et d'une proportion de 5 à 40 % en poids de poudre réactive d'oxyde d'uranium sensiblement à l'état de U$_3$O$_8$ ayant une granulométrie inférieure à 350 microns.

2. Procédé selon la revendication 1, caractérisé en ce que la poudre d'U$_3$O$_8$ est fabriquée par oxydation à l'air, à une température inférieure à 800°C, d'une fraction du dioxyde d'uranium obtenu par voie sèche.

3. Procédé selon la revendication 2, caractérisé en ce que la température d'oxydation est comprise entre 250°C et 350°C.

4. Procédé selon l'une des revendications 1 à 3, caractérisé en ce que la teneur en U$_3$O$_8$ du mélange comprimé en pastilles est au plus de 25 % en poids.

5. Procédé selon l'une des revendications 1 à 4, caractérisé en ce que la poudre à base d'oxyde d'uranium est un oxyde mixte à base d'UO$_2$, de préférence de type UO$_2$-PuO$_2$, UO$_2$-ThO$_2$ ou UO$_2$-Gd$_2$O$_3$.

6. Procédé selon l'une quelconque des revendications 1 à 6, caractérisé en ce qu'on granule le mélange intime de poudres par précompactage et concassage avant compression.

7. Procédé de fabrication de pastilles frittées, caractérisé en ce que,après avoir fabriqué des pastilles en vert par le procédé selon l'une quelconque des revendications précédentes, on fritte lesdites pastilles en vert à une température de 1500 à 1800°C dans une atmosphère réductrice ou de 1200 à 1300°C dans une atmosphère légèrement oxydante.

## Claims

1. Process of manufacturing sinterable uranium dioxide base pellets, comprising: cold compressing a powder mixture constituted, at least predominantly, of uranium oxide $UO_2$ obtained by dry conversion and a proportion of from 5 to 40% by weight of reactive uranium oxide powder substantially as $U_3O_8$, having a grain size less than 350 $\mu$m.

2. Process according to claim 1, characterized in that the $U_3O_8$ powder is manufactured by oxidation in air of part of the $UO_2$ obtained by dry conversion, at a temperature less than 800°C.

3. Process according to claim 2, characterized in that the oxidation temperature is between 250°C and 350°C.

4. Process according to any one of claims 1-3, characterized in that the $U_3O_8$ content of the mixture compressed into pellets is 25% by weight at most.

5. Process according to any one of claims 1-4, characterized in that the uranium oxide base powder is a mixed $UO_2$-base oxide, preferably of the $UO_2$-$PuO_2$, $UO_2$-$ThO_2$ or $UO_2$-$Gd_2O_3$ type.

6. Process according to any one of claims 1-6, characterized in that the intimate mixture of powders is granulated by precompression and crushing before compression.

7. Process of manufacturing sintered pellets, characterized in that, after green pellets have been manufactured by the process according to any one of the preceding claims, said green pellets are sintered at a temperature of from 1500 to 1800°C in a reducing atmosphere or of from 1200 to 1300°C in a slightly oxidizing atmosphere.

## Patentansprüche

1. Verfahren zum Herstellen von auf Urandioxid basierten sinterbaren Tabletten, bei dem in kaltem Zustand eine Pulvermischung aus wenigstens in überwiegendem Maße Uranoxid $UO_2$, das auf trockenem Wege erhalten worden ist, und einem Anteil von 5 bis 40 Gew.% von reaktivem Uranoxidpulver, das sich im wesentlichen im Zustand $U_3O_8$ befindet und eine Korngröße von kleiner als 350 Mikrometer aufweist, zu Tabletten komprimiert wird.

2. Verfahren nach Anspruch 1,
   **dadurch gekennzeichnet,**
   daß das $U_3O_8$-Pulver durch Oxidation an Luft bei einer Temperatur von weniger als 800°C eines Teils des auf trockenem Wege erhaltenen Urandioxids hergestellt wird.

3. Verfahren nach Anspruch 2,
   **dadurch gekennzeichnet,**
   daß die Oxidationstemperatur zwischen 250°C und 350°C beträgt.

4. Verfahren nach einem der Ansprüche 1 bis 3,
   **dadurch gekennzeichnet,**
   daß der Gehalt an $U_3O_8$ der zu Tabletten komprimierten Mischung höchstens 25 Gew.% beträgt.

5. Verfahren nach einem der Ansprüche 1 bis 4,
   **dadurch gekennzeichnet,**
   daß das auf Uranoxid basierte Pulver eine gemischtes Oxid auf $UO_2$-Basis, vorzugsweise vom Typ $UO_2$-$PuO_2$, $UO_2$-$ThO_2$ oder $UO_2$-$Gd_2O_3$ ist.

6. Verfahren nach einem der Ansprüche 1 bis 5,
**dadurch gekennzeichnet,**
daß das Intensivpulvergemisch durch Vorpressung und Grobzerkleinerung vor dem Pressen granuliert wird.

7. Verfahren zum Herstellen von gesinterten Tabletten,
**dadurch gekennzeichnet,**
daß nach der Herstellung von Rohtabletten mittels des Verfahrens nach einem der Ansprüche 1 bis 6, diese Rohtabletten bei einer Temperatur zwischen 1500 und 1800 °C in einer reduzierenden Atmosphäre oder zwischen 1200 und 1300 °C in einer leicht oxidierenden Atmosphäre gesintert werden.